# FASCICULE DE BREVET EUROPEEN

(11) **EP 2 252 958 B1**
(45) Date de publication et mention de la délivrance du brevet: **02.05.2018**
(21) Numéro de dépôt: 09721330.0
(22) Date de dépôt: 12.03.2009
(51) Int. Cl.: G06F 21/52

(54) **PROCEDE DE SECURISATION D'UNE EXECUTION D'UN PROGRAMME**
VERFAHREN ZUR SICHERUNG DER AUSFÜHRUNG EINES PROGRAMMS
METHOD OF SECURING EXECUTION OF A PROGRAM

(30) Priorité: 14.03.2008 FR 0801406
(43) Date de publication de la demande: 24.11.2010
(73) Titulaire: Idemia Identity & Security France, 92130 Issy-les-Moulineaux (FR)
(72) Inventeur: DECROIX, David, F-93100 Montreuil (FR); GONCALVES, Louis-Philippe, F-95170 Deuil La Barre (FR); ROUDIERE, Guillaume, F-92100 Boulogne Billancourt (FR)
(74) Mandataire: Lavialle, Bruno François Stéphane
(86) Numéro de dépôt international: PCT/FR2009/000254
(87) Numéro de publication internationale: WO 2009/115712

(56) Documents cités:
- EP-A- 1 450 232
- DE-A1- 10 252 347
- FR-A- 2 859 548
- US-A1- 2004 168 078

## Description

La présente invention concerne un procédé de sécurisation de l'exécution d'un programme par un microprocesseur, et notamment un microprocesseur d'une carte support de données comme une carte bancaire ou une carte électronique d'identification.

### ARRIERE PLAN DE L'INVENTION

Une telle carte comporte un circuit intégré comprenant généralement un microprocesseur, une mémoire volatile et une mémoire non volatile. La mémoire non volatile contient des données personnelles telles que l'identité de la personne à qui la carte a été délivrée, un code secret d'identification, des informations bancaires ou autres... et au moins un programme principal permettant l'échange d'informations entre la carte et un lecteur d'un terminal auquel elle serait reliée comme un distributeur automatique de billets ou un terminal de paiement. Ce programme principal met en oeuvre plusieurs fonctions imbriquées permettant notamment de communiquer au terminal certaines des données personnelles, de récupérer un code saisi par l'utilisateur sur le terminal, d'opérer des calculs sur ce code par exemple à des fins cryptographiques ou d'authentification, communiquer au terminal le résultat de l'authentification... Ces fonctions sont imbriquées en ce sens qu'une première fonction en cours d'exécution en appelle une deuxième qui en cours d'exécution en appelle une troisième etc. ; le retour à l'exécution de la deuxième fonction puis de la première fonction s'effectuant successivement, après la fin de l'exécution de la troisième fonction et de la deuxième fonction respectivement. Pour permettre le retour à la fonction appelante, le microprocesseur gère une pile d'appel de fonctions qui lui permet de stocker une adresse de retour à chaque fois qu'une fonction est appelée de telle manière qu'à la fin de l'exécution de la fonction appelée, le microprocesseur récupère l'adresse mémorisée dans la pile d'appel de fonctions et y positionne son pointeur d'exécution pour poursuivre l'exécution de la fonction appelante.

Dans ces cartes, l'une des fonctions critiques en matière de sécurité consiste à décrémenter un compteur après chaque échec d'une opération d'authentification consistant à vérifier que le code saisi sur le terminal est bien identique au code secret d'identification mémorisé dans le circuit intégré de la carte. Ce nombre, dans le cas d'une carte bancaire, est généralement fixé à trois tandis que le code lui-même comporte quatre chiffres. Le compteur ainsi décrémenté est remis à sa valeur initiale après une vérification réussie du code. En revanche, après trois échecs de vérification du code, le circuit intégré se bloque. Il existe un mode de fraude consistant à perturber le fonctionnement de la carte à la fin de l'opération d'authentification pour empêcher l'exécution de la fonction assurant la décrémentation du compteur. On comprend que, si cette fonction n'est pas effectuée, le fraudeur peut essayer toutes les combinaisons possibles de quatre chiffres jusqu'à avoir trouvé la bonne.

Un autre mode de fraude consiste à perturber le fonctionnement du microprocesseur pour amener des comportements inattendus du microprocesseur permettant éventuellement de récupérer des données devant normalement rester secrètes. Par exemple, il pourrait être envisageable, après qu'une fonction a été appelée par une fonction appelante, de revenir à l'exécution de la fonction appelante avant la fin de l'exécution de la fonction appelée.
Les demandes de brevets DE10252347 et EP1450232 décrivent des procédés de contrôle de cohérence des appels et fins de fonctions imbriquées basés sur les adresses des emplacements mémoires de certaines instructions ou d'indicateurs liés à ces instructions.

### OBJET DE L'INVENTION

Par l'invention, on propose un moyen permettant de sécuriser l'exécution d'un programme entraînant l'appel de fonctions imbriquées.

### RESUME DE L'INVENTION

A cet effet, on prévoit, selon l'invention, un procédé de sécurisation d'une exécution d'un programme principal mettant en oeuvre des fonctions imbriquées, comprenant les étapes de :
- exécuter un programme gestionnaire de sécurité agencé pour actualiser une liste de fonctions en cours,
- signaler au programme gestionnaire de sécurité un début d'exécution de chaque fonction et actualiser la liste de fonctions en cours,
- signaler une fin d'exécution de chaque fonction au programme gestionnaire de sécurité,
- vérifier après chaque signalement de fin d'exécution d'une fonction que cette fonction est bien la dernière à avoir débuté,
- en cas d'échec de la vérification, réaliser une action de protection sélectionnée en fonction d'un niveau de sécurité attaché à chaque fonction. La liste de fonctions selon l'invention est une table comportant une suite de champs destinés à recevoir un identifiant de fonction et le procédé comprend les étapes de :
- initialiser les champs,
- au signalement du début d'exécution d'une fonction, inscrire l'identifiant de la fonction dans le premier champ libre ;
et dans lequel l'identifiant de chaque fonction contient un niveau de sécurité associé à la fonction et le programme gestionnaire de sécurité a accès à une table mettant en relation des actions de protection à effectuer en fonction des niveaux de sécurité.

Ainsi, la liste tenue par le programme gestionnaire de sécurité permet de détecter un fonctionnement anormal du programme principal et plus particulièrement de l'appel des fonctions. Ce procédé est particulièrement simple et efficace et sa mise en oeuvre n'entraîne qu'un emploi limité des ressources de calcul et de mémoire.

De préférence, l'action de protection consiste par exemple en l'émission d'une alerte ou en une interruption du programme principal.

Avantageusement, le procédé comprend l'étape, au signalement de la fin d'exécution d'une fonction appelée par une fonction appelante, de mémoriser la fonction appelée et faire vérifier par la fonction appelante au gestionnaire de sécurité que la dernière fonction exécutée est la fonction appelée.

D'autres caractéristiques et avantages de l'invention ressortiront à la lecture de la description qui suit d'un mode de mise en oeuvre particulier non limitatif de l'invention.

### BREVE DESCRIPTION DES DESSINS

Il sera fait référence aux dessins annexés, parmi lesquels :
- la figure 1 est une vue schématique d'une carte de données utilisable pour la mise en oeuvre du procédé de l'invention,
- la figure 2 est une représentation illustrant schématiquement le déroulement d'un programme principal dans le cadre du procédé conforme à l'invention,
- la figure 3 est une représentation illustrant schématiquement le déroulement d'un programme gestionnaire de sécurité dans le cadre du procédé conforme à l'invention.

### DESCRIPTION DETAILLEE DE L'INVENTION

En référence aux figures, l'invention est ici décrite en application à une carte de données 1 comportant un circuit intégré, généralement désigné en 2, comprenant un microprocesseur 3 relié à une mémoire volatile 4, par exemple de type RAM ("Random Access Memory"), et à une mémoire non volatile 5, par exemple de type EEPROM ("Electrically Erasable Programmable Read Only Memory") ou ROM (Read Only Memory").

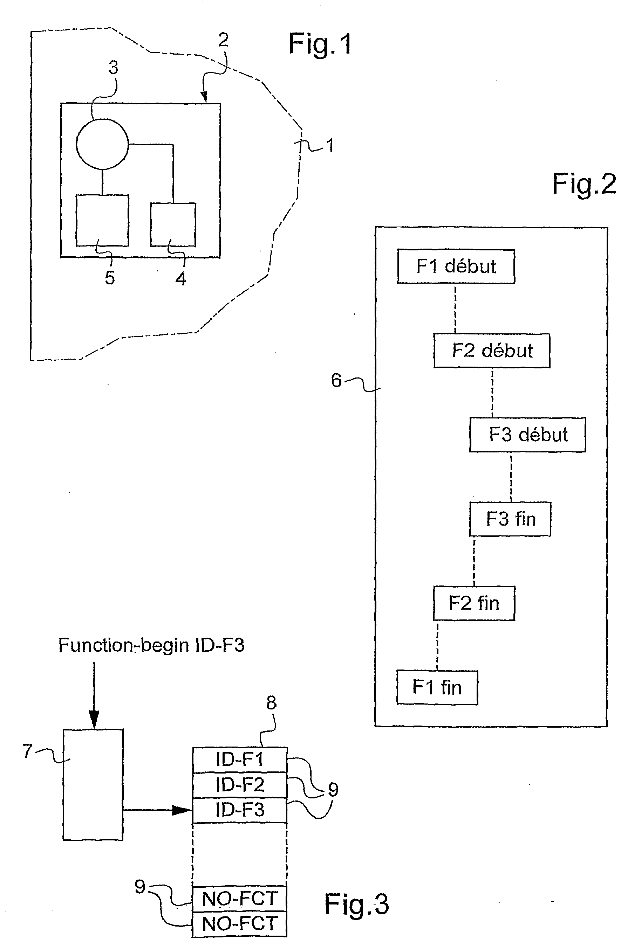

La mémoire non volatile 5 contient un programme principal, symbolisé en 6 sur la figure 2, mettant en oeuvre des fonctions F1, F2, F3 imbriquées. La fonction F1 est agencée pour, lors de son exécution, appeler la fonction F2 qui elle-même est agencée pour, lors de son exécution, appeler la fonction F3. A la fin de l'exécution de la fonction F3, la fonction F2 se poursuit et à la fin de l'exécution de la fonction F2, la fonction F1 se poursuit. La nature des fonctions F1, F2 et F3 importe peu, ces fonctions assurant par exemple les opérations de récupération d'une valeur d'un code saisi sur un terminal auquel est reliée la carte à circuit intégré, des opérations de calculs, de vérification de ce code, de chiffrement, d'incrémentation ou décrémentation d'un compteur, d'inscription d'une mémoire dans une autre...

Chaque fonction F1, F2 et F3 possède un identifiant ID-F1, ID-F2 et ID-F3 désignant de manière unique lesdites fonctions. L'identifiant des fonctions est construit de manière à contenir sous forme codée des informations propres à la fonction et notamment un niveau de sécurité.

La mémoire non volatile 5 contient en outre un programme gestionnaire de sécurité, symbolisé en 7 sur la figure 3, agencé pour établir et actualiser une liste des fonctions en cours d'exécution ou pile d'appel de fonctions. Cette liste se présente sous la forme d'une table 8 comportant une suite de champs 9 destinés à recevoir l'identification des fonctions en cours d'exécution. Le programme gestionnaire de sécurité 7 utilise, de façon connue en elle-même (et donc non décrite en détail ici), un index pour pointer sur le premier champ libre de la pile. Le programme gestionnaire de sécurité a en outre accès à une table mettant en relation des actions de protection à effectuer en fonction des niveaux de sécurité codés dans l'identifiant des fonctions.

Le procédé de l'invention va maintenant être décrit.

En fonctionnement, lorsque le microprocesseur 3 de la carte 1 exécute le programme principal 6, il exécute simultanément le programme gestionnaire de sécurité 7.

Au démarrage, les champs 9 de la table 8 sont initialisés en y inscrivant une valeur pour défaut, ici NOFCT, et l'index pointe sur le premier champ contenant cette valeur par défaut (également appelé champ libre).

Lorsque le programme principal exécute la fonction F1, la fonction F1 signale le début de son exécution au programme gestionnaire de sécurité 7 au moyen d'une interface FONCTION-BEGIN (une telle interface est connue en elle-même). Le programme gestionnaire de sécurité 7 inscrit alors l'identifiant ID-F1 de la fonction 1 dans le premier champ 9 libre de la table 8 et fait pointer son index sur le champ 9 suivant qui devient le premier champ libre.

Lorsque la fonction F1 appelle la fonction F2, la fonction F2 signale le début de son exécution au programme gestionnaire de sécurité au moyen de l'interface FONCTION-BEGIN. Le programme gestionnaire de sécurité 7 inscrit alors l'identifiant de la fonction F2 (ici ID-F2) dans le champ 9 pointé puis fait pointer l'index sur le champ 9 suivant.

Lorsque la fonction F2 appelle la fonction F3, la fonction F3 signale le début de son exécution au programme gestionnaire de sécurité 7 qui inscrit dans le champ pointé par l'index l'identifiant ID-F3 de la fonction F3 et pointe l'index sur le champ 9 suivant.

Lorsque l'exécution de la fonction F3 se termine, la fonction F3 signale la fin de son exécution au programme gestionnaire de sécurité 7 au moyen d'une interface FONCTION-END (une telle interface est connue en elle-même). Le programme gestionnaire de sécurité 7 vérifie alors que la fonction F3 qui signale la fin de son exécution est bien la dernière à avoir débuté son exécution. Si tel est le cas, l'exécution de la fonction F2 se poursuit jusqu'à son terme, la fonction F2 signalant alors au programme gestionnaire de sécurité 7 la fin de son exécution au moyen de l'interface FONCTION-END. Le programme gestionnaire de sécurité 7 vérifie alors que la fonction F2 est bien la dernière à avoir débuté son exécution. Si tel est le cas, l'exécution de la fonction F1 reprend jusqu'à son terme.

Dans l'hypothèse où la fonction signalant au programme gestionnaire de sécurité 7 la fin de son exécution n'est pas la dernière à avoir débuté celle-ci, le programme gestionnaire de sécurité 7 effectue une action de protection. Cette action de protection est ici une alerte émise à destination du programme principal 6 qui interrompt son exécution. L'action de protection peut également se traduire par un blocage de la carte, le déblocage ne pouvant être réalisé par exemple que par l'organisme émetteur de la carte après vérification de l'identification du détenteur de celle-ci. L'action de protection peut être une contre-mesure de sécurité. Par contre-mesure de sécurité, on entend un moyen permettant notamment d'éviter une récupération d'informations par un fraudeur par exemple en :
- faisant varier la fréquence d'horloge,
- insérant de façon aléatoire des instructions pour modifier la durée d'exécution du code, les émissions électromagnétiques ou la consommation énergétique lors de l'exécution du code...

Au début de l'exécution de la fonction, le programme gestionnaire de sécurité détermine à partir de l'identifiant de cette fonction quelle(s) action(s) de protection ou contre-mesure(s) sécuritaire(s) activer. En variante, lorsque la fin d'exécution d'une fonction intervient alors que cette fonction n'est pas la dernière à avoir débuté, le programme gestionnaire de sécurité peut être agencé pour déduire de l'identifiant de cette fonction l'action de protection à exécuter.

Le programme gestionnaire de sécurité peut également être agencé pour activer au moins une contre-mesure de sécurité au début de l'exécution d'une fonction. L'identifiant de la fonction est alors de préférence déterminé pour indiquer au programme gestionnaire de sécurité la nécessité de l'activation d'une telle mesure sans nécessairement constituer une indication de la nature de cette contre-mesure (cette contre-mesure peut être la même pour toutes les fonctions nécessitant cette activation).

En variante encore, le procédé peut comprendre l'étape de mémoriser la dernière fonction exécutée lorsque celle-ci signale la fin de son exécution. La fonction ayant appelé la dernière fonction exécutée peut alors interroger le programme gestionnaire de sécurité pour lui demander de contrôler la cohérence entre l'exécution nominale du programme et l'exécution réelle. Dans l'exemple décrit ci-dessus, lorsque la fonction F3 a signalé la fin de son exécution, la fonction F2 peut demander au programme gestionnaire de sécurité de vérifier que c'est bien la fonction F3 qui vient de se terminer.

Bien entendu, l'invention n'est pas limitée au mode de réalisation décrit et on peut y apporter des variantes de réalisation sans sortir du cadre de l'invention telle que définie par les revendications.

En particulier, selon une variante, on peut prévoir une table des appels possibles de fonctions par chaque fonction du programme principal. A titre d'exemple, si la fonction F2 appelle la fonction F3, le programme gestionnaire de sécurité contrôle que la fonction F2 a bien le droit d'appeler la fonction F3. Il est également possible d'affecter les fonctions à des groupes et d'élaborer un identifiant des fonctions rattachant celles-ci aux groupes auxquels elles appartiennent pour permettre au programme gestionnaire de sécurité de vérifier que les fonctions qui s'appellent mutuellement appartiennent bien au même groupe.

## Revendications

1. Procédé de sécurisation d'une exécution d'un programme principal (6) mettant en oeuvre des fonction imbriquées (F1, F2, F3), comprenant les étapes de :
- exécuter un programme gestionnaire de sécurité (7) agencée pour actualiser une liste de fonctions en cours (8),
- signaler au programme gestionnaire de sécurité, (7) un début d'exécution de chaque fonction (F1, F2, F3) du programme principal (6) et actualiser la liste de fonctions en cours (8),
- signaler une fin d'exécution de chaque fonction (F1, F2, F3) au programme gestionnaire de sécurité (7),
- vérifier après chaque signalement de fin d'exécution d'une fonction (F1, F2, F3) que cette fonction est bien à dernière à avoir débuté ;
- en cas d'échec de la vérification, réaliser une action de protection sélectionnée en fonction d'un niveau de sécurité attaché à chaque fonction ;
dans lequel, la liste de fonctions (8) étant une table comportant une suite de champs (9) destinés à recevoir un identifiant de fonction (ID-F1, ID-F2, ID-F3), le procédé comprend les étapes :
- initialiser les champs (9),
- au signalement du début d'exécution d'une fonction (F1, F2, F3), inscrire l'identifiant de la fonction (ID-F1, ID-F2, ID-F3) dans le premier champ (9) libre ;
et dans lequel l'identifiant de chaque fonction (ID-F1, ID-F2, ID-F3) contient un niveau de sécurité associé à la fonctions (F1, F2, F3) et le programme gestionnaire de sécurité (7) a accès à une table mettant en relation des actions de protection à effectuer en fonction des niveaux de sécurité.

2. Procédé selon à revendication 1, dans lequel l'action de protection consiste en l'émission d'une alerte.

3. Procédé selon la revendication 1, dans lequel l'action de protection consiste en une interruption du programme principal (6).

4. Procédé selon la revendication 1, dans lequel le programme gestionnaire de sécurité (7) a accès à une table des appels possibles de fonctions par chaque fonction (F1, F2, F3) du programme principal (6).

5. Procéde selon la revendication 1, dans lequel au signalement de la fin d'exécution d'une fonction appelée par une fonction appelante, le procédé comprend l'étape de mémoriser la fonction appelée et faire vérifier par la fonction appelante au gestionnaire de sécurité (7) que à dernière fonction exécutée est la fonction appelée.

6. procédé selon la revendication 1, dans lequel au début d'exécution d'une fonction, le programme gestionnaire de sécurité (7) active au moins une contre-mesure de sécurité.

## Patentansprüche

1. Verfahren zur Sicherung einer Ausführung eines Hauptprogramms (6), das verschachtelte Funktionen (F1, F2, F3) verwendet, umfassend die Schritte:
- Ausführen eines Sicherheitsverwaltungsprogramms (7), das so ausgebildet ist, dass es eine Liste (8) von laufenden Funktionen aktualisiert,
- Melden eines Beginns einer Ausführung jeder Funktion (F1, F2, F3) des Hauptprogramms (6) an das Sicherheitsverwaltungsproramm (7) und Aktualisieren der Liste (8) von laufenden Funktionen,
- Melden eines Endes einer Ausführung jeder Funktion (F1, F2, F3) an das Sicherheitsverwaltungsprogramm (7),
- nach jedem Melden eines Endes einer Ausführung einer Funktion (F1, F2, F3) Verifizieren, dass diese Funktion wirklich die letzte ist, die begonnen wurde;
- im Falle eines Versagens des Verifizierens Durchführen einer Schutzhandlung, die abhängig von einem Sicherheitsniveau ausgewählt wird, das mit jeder Funktion verbunden ist,
wobei, unter Berücksichtigung, dass die Funktionsliste (8) eine Tabelle ist, die eine Folge von Feldern (9) umfasst, die dazu bestimmt sind, eine Funktionskennung (ID-F1, ID-F2, ID-F3) aufzunehmen, das Verfahren die Schritte umfasst:
- initialisieren der Felder (9),
- beim Melden des Beginns einer Ausführung einer Funktion (F1, F2, F3) Einschreiben der Kennung (ID-F1, ID-F2, ID-F3) der Funktion in das erste freie Feld (9);
und wobei die Kennung (ID-F1, ID-F2, ID-F3) jeder Funktion ein Sicherheitsniveau enthält, das mit der Funktion (F1, F2, F3) verbunden ist, und das Sicherheitsverwaltungsprogramm (7) Zugriff auf eine Tabelle hat, die auszuführende Schutzhandlungen abhängig von den Sicherheitsniveaus in Beziehung setzt.

2. Verfahren nach Anspruch 1, bei dem die Schutzhandlung aus dem Senden eines Alarms besteht.

3. Verfahren nach Anspruch 1, bei dem die Schutzhandlung aus einem Unterbrechen des Hauptprogramms (6) besteht.

4. Verfahren nach Anspruch 1, bei dem das Sicherheitsverwaltungsprogramm (7) Zugriff auf eine Tabelle von möglichen Funktionsaufrufen durch jede Funktion (F1, F2, F3) des Hauptprogramms hat (6).

5. Verfahren nach Anspruch 1, bei dem beim Melden des Endes einer Ausführung einer durch eine aufrufende Funktion aufgerufenen Funktion die aufgerufene Funktion gespeichert und durch die aufrufende Funktion an der Sicherheitsverwaltung (7) verifiziert wird, dass die letzte ausgeführte Funktion die aufgerufene Funktion ist.

6. Verfahren nach Anspruch 1, bei dem zu Beginn einer Ausführung einer Funktion das Sicherheitsverwaltungsprogramm (7) mindestens eine Sicherheitsgegenmaßnahme aktiviert.

## Claims

1. A method of securing execution of a main program (6) that implements nested functions (F1, F2, F3), the method comprising the steps of:
• executing a security management program (7) arranged to update a list of current functions (8);
• informing the security management program (7) of the beginning of execution of each function (F1, F2, F3) of the main program (6) and updating the list of current functions (8);
• informing the security management program (7) of the end of execution of each function (F1, F2, F3);
• after being informed of each end of execution of a function (F1, F2, F3), verifying that the function is indeed the function that was begun the most recently; and
• in the event of the verification failing, performing a protection action that is selected as a function of a security level associated with each function ;
wherein the list of functions (8) is a table comprising a sequence of fields (9) for receiving respective function identifiers (ID-F1, ID-F2, ID-F3), the method comprising the steps of:
• initializing the fields (9),
• on being informed of the beginning of the execution of a function (F1, F2, F3), writing the identifier of the function (ID-F1, ID-F2, ID-F3) in the first available field (9).
and wherein the identifier of each function (ID-F1, ID-F2, ID-F3)contains a security level associated with the function (F1, F2, F3) and the security management program (7) has access to a table associating protection actions that are to be performed as a function of the security levels.

2. A method according to claim 1, wherein the protection action consists in issuing a warning.

3. A method according to claim 1, wherein the protection action consists in interrupting the main program (6).

4. A method according to claim 1, wherein the safety management program (7) has access to a table of possible function calls from each function (F1, F2, F3) of the main program (6).

5. A method according to claim 1, wherein, on being informed of the end of execution of a function called by a calling function, the method consists of the step of storing the called function in memory and in causing the function calling the security manager (7) to verify that the most-recently executed function is the called function.

6. A method according to claim 1, wherein, at the beginning of execution of a function, the security management program (7) activates at least one security countermeasure.
